# EUROPÄISCHE PATENTSCHRIFT

(11) **EP 4 180 371 B1**
(45) Veröffentlichungstag und Bekanntmachung des Hinweises auf die Patenterteilung: **21.05.2025**
(21) Anmeldenummer: 22207110.2
(22) Anmeldetag: 14.11.2022
(51) Int. Cl.: B65G 54/02

(54) **TRANSPORT VON GEGENSTÄNDEN MIT UNTERSCHIEDLICHEN FORMATEN**
TRANSPORT OF ARTICLES OF DIFFERENT FORMATS
TRANSPORT D'ARTICLES DE FORMATS DIFFERENTS

(30) Priorität: 15.11.2021 DE 102021129702
(43) Veröffentlichungstag der Anmeldung: 17.05.2023
(60) Teilanmeldung: 25170037.3
(73) Patentinhaber: KRONES AG, 93073 Neutraubling (DE)
(72) Erfinder: NEUBAUER, Michael, 93073 Neutraubling (DE)
(74) Vertreter: v. Bezold & Partner Patentanwälte - PartG mbB

(56) Entgegenhaltungen:
- EP-A1- 2 653 036
- EP-A1- 3 768 622
- EP-A1- 3 907 162
- WO-A1-2016/064950
- DE-A1- 102019 104 088

## Beschreibung

### Technisches Gebiet

Die Erfindung betrifft Vorrichtungen und Verfahren zum Transportieren von Gegenständen, vorzugsweise Behältern.

### Technischer Hintergrund

Behälterbehandlungsanlagen bestehen üblicherweise aus einer Reihe von unterschiedlichen, nacheinander angeordneten Behandlungsstationen. An diesen werden die Behälter verschiedenen Behandlungen unterzogen. Hierbei kann es sich beispielsweise um einen Füll-, Verschließ- oder Etikettiervorgang handeln. Zum Transport der Behälter zwischen den Stationen gibt es eine Vielzahl von Möglichkeiten. Es gibt taktend arbeitende Maschinen, wie sie beispielsweise für die Produktion von Getränkekartons eingesetzt werden. Hier erfolgt der Transport der Behälter meist durch eine Kette. In Maschinen zur Befüllung von Getränkebehältern kommen üblicherweise Transfersterne zum Einsatz, die die Behälter durch die Anlage transportieren.

Ein aktueller Entwicklungstrend beim Transport von Behältern, wie bspw. Flaschen oder Dosen, in Anlagen und Maschinen für die Herstellung, Abfüllung und Verpackung von Getränken und flüssigen Nahrungsmitteln ist die Linearmotortechnik, z. B. in Form von Langstator-Linearmotorsystemen oder Kurzstator-Linearmotorsystemen. Bei einem Langstator- Linearmotorsystem kann ein ortsfester Langstator mit Elektromagneten zum Bewirken einer Bewegung der mit Permanentmagneten ausgestatteten Bewegungsvorrichtungen eingesetzt werden. Bei Kurzstator-Linearmotorsystemen können hingegen die Bewegungsvorrichtungen jeweils einen durch Elektromagnete gebildeten Kurzstator aufweisen, der zum Bewegen der Bewegungsvorrichtung in magnetische Wechselwirkung mit ortsfesten Permanentmagneten treten kann. Die Bewegungsvorrichtungen, auch "shuttle" oder "mover" genannt, können jeweils eine oder mehrere Behälter bewegen. Ein großer Vorteil der Linearmotortechnik liegt darin, dass die Bewegungsvorrichtungen individuell bzw. separat und unabhängig voneinander angesteuert werden können.

Die WO 2019/159116 A1 offenbart eine Maschine zum Behandeln oder Fördern von Behältern, mit einer Führung, die sich entlang einer Zuführrichtung zum Zuführen der Behälter erstreckt, und einer Vielzahl von Schlitten zum Tragen der Behälter, die auf derselben Führung hintereinander gleitend angebracht sind. Die Führung und jeder Schlitten definieren zusammen entsprechende Linearmotoren. Jeder Tragschlitten umfasst insbesondere zwei Greifmittel, die jeweils auf verschiedenen und aufeinanderfolgenden Schlitten entlang derselben Führung montiert sind. Die Schlitten sind aufeinander zu oder voneinander weg beweglich, um den gegenseitigen Abstand entlang der Zuführrichtung für die Zuführung der Behälter zu regulieren und einen Greifbereich der Greifmittel zwischen ihnen in Abhängigkeit von der Art des zu entnehmenden oder freizugebenden Behälters zu definieren.

Die EP 3 109 189 A1 offenbart eine Transfervorrichtung zum Transportieren einer Folge von Verpackungseinheiten entlang einer Transferstrecke. Die Transfervorrichtung umfasst einen ersten umlaufenden Träger, der mindestens einen operativen Zweig parallel zum Transferweg aufweist, mindestens ein erstes Förderelement, das entlang des ersten umlaufenden Trägers vorwärts bewegt wird, einen zweiten umlaufenden Träger, der an den ersten umlaufenden Träger angrenzt und mindestens einen operativen Zweig parallel zum Transferweg aufweist, und mindestens ein zweites Förderelement, das unabhängig vom ersten Förderelement gesteuert und entlang des zweiten Umlaufträgers vorwärts bewegt wird. Das erste Förderelement und das zweite Förderelement sind so konfiguriert, dass sie jeweils eine Verpackungseinheit dazwischen halten und eine solche Verpackungseinheit entlang des Transferpfades vorwärtsbewegen.

Die EP 3 768 622 A1 offenbart eine Maschine, die eine gattungsbildende Vorrichtung darstellt, und ein Verfahren zum Positionieren von Gegenständen. Die Maschine umfasst ein erstes Förderband, das eine Vielzahl von Objekten aufnimmt, eine maschinelle Bildverarbeitungseinrichtung, die die Position und die Form der Objekte identifiziert, eine robotergestützte Sammeleinrichtung, die die Objekte gemäß den von der maschinellen Bildverarbeitungseinrichtung erhaltenen Informationen sammelt, und ein zweites Förderband, das den Auslass der Objekte ermöglicht. Der Transferförderer verfügt über Transferträger, die sich in einer geschlossenen Schleife durch ihn bewegen, so dass ihre Geschwindigkeit und Position unabhängig gesteuert werden können. Die Transferträger nehmen die von den Robotersammelmitteln kommenden Objekte auf und geben die Objekte an das zweite Förderband ab.

Die WO 2016/064950 A1 offenbart eine Vorrichtung zur Bearbeitung von Glasscheiben. Die Vorrichtung umfasst ein Einschienenbahnsegment und ein Doppelschienensegment, die jeweils so konfiguriert sind, dass sie das Gewicht einer Glasscheibe tragen. In weiteren Ausführungsformen umfassen Verfahren zur Verarbeitung von Glasscheiben den Schritt des Förderns einer hängenden Glasscheibe entlang einer Glasscheibentransportrichtung, während ein Winkel zwischen einer Hauptfläche der Glasscheibe und der Glasscheibentransportrichtung geändert wird. In weiteren Beispielen umfassen die Verfahren das Fördern der hängenden Glastafel entlang einer ersten Glastafel-Förderrichtung, während sich eine Hauptfläche der Glastafel in einem ersten Winkel relativ zur ersten Glastafel-Förderrichtung befindet; und dann das Fördern der hängenden Glastafel entlang einer zweiten Glastafel-Förderrichtung, während sich eine Hauptfläche der Glastafel in einem zweiten Winkel relativ zur zweiten Glastafel-Förderrichtung befindet.

Die EP 3 907 162 A1 offenbart eine Anlage zum Verarbeiten von Behältern, mit einer Zuführvorrichtung, einer Aufnahmevorrichtung und einer dazwischen angeordneten Fördervorrichtung, und mit einer Greifeinheit, die ein erstes Halteelement und ein zweites Halteelement aufweist, die gleitend mit einer feststehenden Trageinheit gekoppelt sind, sich mittels entsprechender Linearmotorantriebe an dieser entlang bewegen und zwischen sich ein Gehäuse für einen Behälter bilden. Die Behälterzuführeinrichtung und/oder die Behälteraufnahmeeinrichtung weisen jeweils eine Stützplatte auf, die an der Unterseite mit der Greifeinheit in einer Startstation und/oder in einer Ankunftsstation koppelbar ist und mit einem oder mehreren erhöhten oder anhebbaren Abschnitten ausgestattet ist, die von unten in das Gehäuse eingeführt werden, um den Behälter unabhängig von der Greifeinheit zu stützen.

Die EP 2 653 036 A1 betrifft ein Verfahren und eine Vorrichtung zum Aufhängen von Würsten, wobei Würste von auf einer Umlaufbahn laufenden Aufhängehaken aufgenommen und in Transportrichtung an den Aufhängehaken hängend in einen Abnahmebereich transportiert werden. Zumindest ein Teil der Aufhängehaken kann unabhängig voneinander angesteuert werden.

Der Erfindung liegt die Aufgabe zu Grunde, die zuvor beschrieben Techniken derart weiterzuentwickeln, dass auf einfache Weise ohne Umrüsten der Vorrichtung Gegenstände, vorzugsweise Behälter, unterschiedlicher Formate transportiert werden können, vorzugweise mit einer möglichst geringen Teilung.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt der vorliegenden Erfindung betrifft eine Vorrichtung zum Transportieren von Gegenständen, vorzugsweise Behältern, entlang eines Transportpfads, aufweisend mindestens eine (z. B. geschlossene bzw. umlaufende) Führungsbahn. Die Vorrichtung weist ferner erste Bewegungsvorrichtungen und zweite Bewegungsvorrichtungen zum Transportieren der Gegenstände auf. Die ersten Bewegungsvorrichtungen und die zweiten Bewegungsvorrichtungen sind abwechselnd hintereinander entlang der mindestens einen Führungsbahn geführt und individuell antreibbar, vorzugsweise mittels eines Langstator-Linearantriebs oder eines Kurzstator-Linearantriebs. Die Vorrichtung weist ferner eine Steuereinheit auf, die dazu konfiguriert ist, die Vorrichtung in einem ersten Betriebsmodus und in einem zweiten Betriebsmodus zu betreiben. In dem ersten Betriebsmodus und in dem zweiten Betriebsmodus werden die Gegenstände jeweils von Paaren, die jeweils aus einer der ersten Bewegungsvorrichtungen und einer der zweiten Bewegungsvorrichtungen gebildet sind, transportiert. In dem ersten Betriebsmodus sind die Paare derart gebildet, dass die erste Bewegungsvorrichtung in einer Richtung des Transportpfads vor der zweiten Bewegungsvorrichtung des jeweiligen Paares positioniert ist. In dem zweiten Betriebsmodus sind die Paare derart gebildet, dass die zweite Bewegungsvorrichtung in der Richtung des Transportpfades vor der ersten Bewegungsvorrichtung des jeweiligen Paares positioniert ist.

Vorteilhaft ermöglicht die Vorrichtung, dass verschiedenste Gegenstände, vorzugsweise Behälter, ohne mechanische Formatumstellung an den Bewegungsvorrichtungen transportiert werden können. Es kann zudem eine vergleichsweise geringe Teilung (Abstand zwischen aufeinanderfolgend transportierten Gegenstände) erzielt werden, was wichtig für eine hohe Maschinenleistung ist. Beim Formatwechsel kann die Zusammenarbeit der Bewegungsvorrichtungen zum Transportieren der Gegenstände gewechselt werden. Für eine erste Gruppe von Gegenständen, z. B. kleine Behälter, kann die Vorrichtung im ersten Betriebsmodus betrieben werden. Für eine zweite Gruppe von Gegenständen, z. B. große Behälter, kann die Vorrichtung im zweiten Betriebsmodus betrieben werden. Für einen Formatwechsel kann zwischen dem ersten und zweiten Betriebsmodus gewechselt werden, ohne dass ein zeit- und kostenintensives mechanisches Umrüsten der Vorrichtung erforderlich ist. Der Formatwechsel kann somit auf einfache Weise rein steuerungstechnisch durch Wechseln des Betriebsmodus durchgeführt werden.

Beispielsweise können die ersten Bewegungsvorrichtungen und die zweiten Bewegungsvorrichtungen dazu ausgebildet sein, die Gegenstände hängend, tragend oder über eine Grundfläche schiebend zu transportieren.

Vorzugsweise sind die die ersten Bewegungsvorrichtungen und die zweiten Bewegungsvorrichtungen entlang derselben Führungsbahn geführt.

In einem Ausführungsbeispiel ist die Steuereinheit dazu konfiguriert, die Vorrichtung zum Transportieren von Gegenständen eines ersten Formats in dem ersten Betriebsmodus und zum Transportieren von Gegenständen eines zweiten Formats, das sich von dem ersten Format, vorzugsweise in einer Form und/oder einer Größe, unterscheidet, in dem zweiten Betriebsmodus zu betreiben.

In einem weiteren Ausführungsbeispiel unterscheiden sich die ersten Bewegungsvorrichtungen und die zweiten Bewegungsvorrichtungen voneinander, vorzugsweise bezüglich einer Anordnung und/oder einer Konfiguration einer Abstützung für die Gegenstände. Vorteilhaft können die ersten Bewegungsvorrichtungen und die zweiten Bewegungsvorrichtungen damit auf sehr unterschiedliche Formate angepasst sein und/oder eine sehr kleine Teilung beim Transport ermöglichen, obwohl die Gegenstände vergleichsweise groß sein können.

Es ist auch möglich, dass die ersten Bewegungsvorrichtungen und die zweiten Bewegungsvorrichtungen baugleich, aber unterschiedlich zu der mindestens einen Führungsbahn ausgerichtet sind, wobei vorzugsweise die zweiten Bewegungsvorrichtungen um im Wesentlichen 180° um eine jeweilige Nickachse der zweiten Bewegungsvorrichtungen relativ zu den ersten Bewegungsvorrichtungen gedreht sind.

Erfindungsgemäß weisen die ersten Bewegungsvorrichtungen und die zweiten Bewegungsvorrichtungen jeweils einen ersten, vorzugsweise V-förmigen, ringsegmentförmigen oder planaren, Stützabschnitt, der in der Richtung des Transportpfads gerichtet ist, und einen zweiten, vorzugsweise V-förmigen, ringsegmentförmigen oder planaren, Stützabschnitt, der entgegengesetzt zu der Richtung des Transportpfads gerichtet ist, zum Abstützen der Gegenstände während des Transports auf. Vorzugsweise sind im ersten Betriebsmodus die Gegenstände jeweils zwischen dem zweiten Stützabschnitt der ersten Bewegungsvorrichtungen und dem ersten Stützabschnitt der zweiten Bewegungsvorrichtungen abgestützt. Alternativ oder zusätzlich sind im zweiten Betriebsmodus die Gegenstände jeweils zwischen dem ersten Stützabschnitt der ersten Bewegungsvorrichtungen und dem zweiten Stützabschnitt der zweiten Bewegungsvorrichtungen abgestützt.

Vorzugsweise können im ersten Betriebsmodus der zweite Stützabschnitt der ersten Bewegungsvorrichtung und der erste Stützabschnitt der zweiten Bewegungsvorrichtung des jeweiligen Paares einander zugewandt sein.

Bevorzugt können im zweiten Betriebsmodus der erste Stützabschnitt der ersten Bewegungsvorrichtung und der zweite Stützabschnitt der zweiten Bewegungsvorrichtung des jeweiligen Paares einander zugewandt sein.

In einer nicht erfindungsgemäßen Ausführungsform sind die ersten Stützabschnitte der ersten Bewegungsvorrichtungen und die zweiten Stützabschnitte der ersten Bewegungsvorrichtungen konstruktiv unterschiedlich ausgeführt. Vorzugsweise sind die ersten Stützabschnitte der zweiten Bewegungsvorrichtungen konstruktiv wie die zweiten Stützabschnitte der ersten Bewegungsvorrichtungen ausgeführt, und/oder die zweiten Stützabschnitte der zweiten Bewegungsvorrichtungen sind konstruktiv wie die ersten Stützabschnitte der ersten Bewegungsvorrichtungen ausgeführt. Vorteilhaft kann damit bspw. erreicht werden, dass Gegenstände mit sehr unterschiedlichen Formaten, z. B. Behälter mit konischer Form und Behälter mit zylindrischer Form, gleichermaßen von der Vorrichtung transportiert werden können. Beispielsweise können die Behälter mit konischer Form im ersten Betriebsmodus transportiert werden. Die Behälter mit der zylindrischen Form können wiederum im zweiten Betriebsmodus transportiert werden.

Erfindungsgemäß sind die ersten Stützabschnitte der ersten Bewegungsvorrichtungen, die zweiten Stützabschnitte der ersten Bewegungsvorrichtungen, die ersten Stützabschnitte der zweiten Bewegungsvorrichtungen und die zweiten Stützabschnitte der zweiten Bewegungsvorrichtungen baugleich ausgeführt. Vorteilhaft kann die konstruktive Ausführung der Stützabschnitte in dieser Ausführungsform bereits derart sein, dass unterschiedliche Formate von Gegenständen mit den gleichen Stützabschnitten zum Transportieren abgestützt werden können.

In einer weiteren Ausführungsform sind die ersten Stützabschnitte der ersten Bewegungsvorrichtungen zurückversetzt bezüglich der Richtung des Transportpfads und/oder die zweiten Stützabschnitte der zweiten Bewegungsvorrichtungen sind zurückversetzt zu einer Richtung entgegengesetzt zu der Richtung des Transportpfads. Alternativ oder zusätzlich können die zweiten Stützabschnitte der ersten Bewegungsvorrichtungen vorstehend zu einer Richtung entgegengesetzt zu der Richtung des Transportpfads sein und/oder die ersten Stützabschnitte der zweiten Bewegungsvorrichtungen können vorstehend bezüglich der Richtung des Transportpfads sein. Vorteilhaft kann damit beim Transport großer Gegenstände eine geringe Teilung erreicht werden.

In einer Ausführungsvariante weisen die ersten Bewegungsvorrichtungen und die zweiten Bewegungsvorrichtungen jeweils einen Tragarm auf, der den ersten Stützabschnitt und den zweiten Stützabschnitt der jeweiligen Bewegungsvorrichtung trägt, vorzugsweise am gleichen Ende des Tragarms. Bevorzugt können die Tragarme der ersten Bewegungsvorrichtungen und die Tragarme der zweiten Bewegungsvorrichtungen entgegengesetzt zueinander gekröpft sein. Vorteilhaft kann die Kröpfung der Tragarme somit im zweiten Betriebsmodus, z. B. bei großen Gegenständen, nach außen gerichtet sein. Bei kleinen Gegenständen kann die Kröpfung der Tragarme im ersten Betriebsmodus nach innen gerichtet sein. Auf diese Art kann auch bei großen Behältern eine Teilung erreicht werden, die deutlich kleiner ist, als diejenige die bei einer starren Zuordnung von Bewegungsvorrichtungen erreicht werden kann.

Ein weiterer Aspekt der vorliegenden Offenbarung betrifft eine Vorrichtung zum Transportieren von Gegenständen, vorzugsweise Behältern, entlang eines Transportpfads, aufweisend mindestens eine (z. B. geschlossene bzw. umlaufende) Führungsbahn. Die Vorrichtung weist mehrere Bewegungsvorrichtungen zum Transportieren der Gegenstände auf, wobei die mehreren Bewegungsvorrichtungen entlang der mindestens einen Führungsbahn geführt und individuell antreibbar sind, vorzugsweise mittels eines Langstator-Linearantriebs oder eines Kurzstator-Linearantrieb. Die Vorrichtung weist eine Steuereinheit auf, die dazu konfiguriert ist, die mehreren Bewegungsvorrichtungen derart zu steuern, dass jeweils eine Gruppe aus mindestens drei der mehreren Bewegungsvorrichtungen gemeinsam einen zwischen sich positionierten, vorzugsweise eingespannten, Gegenstand entlang des Transportpfads bis hin zu einem Übergabebereich der Vorrichtung zum Übergeben des Gegenstands transportieren.

Vorteilhaft kann die Vorrichtung ermöglichen, dass ohne Umrüsten der Bewegungsvorrichtungen eine sehr hohe Flexibilität bei den transportierbaren Formaten erreicht werden kann. Durch die Vielzahl an Kontaktpunkten mit dem Gegenstand durch die mindestens drei Bewegungsvorrichtungen kann fast jede beliebige Kontur transportiert werden. Eine Formatumstellung kann wiederum auf einfache Weise rein steuerungstechnisch durch Verändern der Anordnung der Bewegungsvorrichtungen zueinander erreicht werden. Auf eine zeit- und kostenintensive mechanische Umrüstung der Bewegungsvorrichtungen beim Formatwechsel kann verzichtet werden.

In einem Ausführungsbeispiel ist die Steuereinheit dazu konfiguriert, dass die Gruppen jeweils aus genau drei der mehreren Bewegungsvorrichtungen gebildet sind, wobei der Gegenstand vorzugsweise in einer Dreipunkt-Lagerung von den genau drei Bewegungsvorrichtungen der jeweiligen Gruppe gestützt oder getragen ist, bevorzugt an einer Umfangsfläche bzw. Mantelfläche des Gegenstands. Vorteilhaft kann damit eine minimal mögliche Teilung verringert werden und zudem nicht unnötig viele Bewegungsvorrichtungen zum Transport eines Gegenstands eingesetzt werden.

In einem weiteren Ausführungsbeispiel weist die mindestens eine Führungsbahn eine erste Führungsbahn und eine zweite Führungsbahn auf, die sich im Wesentlichen parallel erstrecken und übereinander angeordnet sind. Die Steuereinheit ist dazu konfiguriert, eine erste Gruppe der Gruppen derart zu bilden, dass eine der drei Bewegungsvorrichtungen der ersten Gruppe an der ersten Führungsbahn geführt ist und die anderen zwei der drei Bewegungsvorrichtungen der ersten Gruppe an der zweiten Führungsbahn geführt sind. Die Steuereinheit ist ferner dazu konfiguriert, eine zweite, vorzugsweise der ersten Gruppe direkt folgende, Gruppe der Gruppen derart zu bilden, dass zwei der drei Bewegungsvorrichtungen der zweiten Gruppe an der ersten Führungsbahn geführt sind und die andere der drei Bewegungsvorrichtungen der zweiten Gruppe an der zweiten Führungsbahn geführt ist. Vorteilhaft kann damit eine minimal mögliche Teilung besonders wirksam verringert werden, da aufeinanderfolgende Gegenstände sehr dicht beieinander transportiert werden können.

Vorzugsweise können die erste Gruppe und die zweite Gruppe in einer Draufsicht auf die Vorrichtung bzw. die Gruppen von oben während des Transports miteinander überlappen.

In einem weiteren Ausführungsbeispiel ist die Steuereinheit dazu konfiguriert, dass die Gruppen jeweils aus genau vier der mehreren Bewegungsvorrichtungen gebildet, wobei der Gegenstand vorzugsweise in einer Vierpunkt-Lagerung von den genau vier Bewegungsvorrichtungen der jeweiligen Gruppe gestützt oder getragen ist, bevorzugt an einer Umfangsfläche bzw. Mantelfläche des Gegenstands. Vorteilhaft kann die Vierpunkt-Lagerung eine besonders große Flexibilität bezüglich möglicher Konturen von transportierbaren Gegenständen ermöglichen.

Vorzugsweise kann die mindestens eine Führungsbahn eine erste Führungsbahn und eine zweite Führungsbahn aufweisen, die sich im Wesentlichen parallel erstrecken und übereinander angeordnet sind. Die Steuereinheit kann bevorzugt dazu konfiguriert sein, die Gruppen so zu bilden, dass je Gruppe zwei der vier Bewegungsvorrichtungen an der ersten Führungsbahn geführt sind und die zwei anderen der vier Bewegungsvorrichtung an der zweiten Führungsbahn geführt sind.

Ein weiterer Aspekt der vorliegenden Erfindung betrifft eine Behandlungsanlage zum Behandeln von Behältern, aufweisend eine Vorrichtung wie hierin offenbart. Vorteilhaft kann durch die Vorrichtung ermöglicht werden, dass die erreichbare Teilung (Abstand) der Behandlungsstationen der Behandlungsanlange minimiert werden kann, da diese an eine minimal erreichbare Teilung beim Transport der Gegenstände durch die Vorrichtung angepasst sein kann bzw. dieser entsprechen kann. Wie erläutert, kann die Vorrichtung ermöglichen, dass die Bewegungsvorrichtung zum Erreichen einer geringen Teilung sehr nahe zusammenfahren können, um so z. B. den Abstand von zwei aufeinander folgenden Füllventilen so gering wie möglich zu halten.

Vorzugsweise kann die Behandlungsanlage zum Herstellen, Reinigen, Beschichten, Prüfen, Abfüllen, Verschließen, Etikettieren, Bedrucken und/oder Verpacken von Behältern für flüssige Medien, vorzugsweise Getränke oder flüssige Nahrungsmittel, ausgebildet sein.

Beispielsweise können die Behälter als Flaschen, Dosen, Kanister, Kartons, Flakons usw. ausgeführt sein.

Bevorzugt kann die Behandlungsanlage mehrere Behandlungsstationen (z. B. Füllstationen, Verschließstationen und/oder Etikettierstationen) für die von der Vorrichtung transportierten Behälter aufweisen, wobei die mehreren Behandlungsstationen entlang der mindestens einen Führungsbahn angeordnet sind. Wenn bspw. in einer Abfüllmaschine mehrere, z. B. fünf, Füllventile hintereinander an der Führungsbahn positioniert sind, so können von der Vorrichtung immer mehrere bzw. fünf Behälter gleichzeitig unter diese Füllventile bewegt und dort gefüllt werden. Nach Beendigung des Füllvorganges bewegt die Vorrichtung die mehreren bzw. fünf gefüllten Behälter weiter und mehrere bzw. fünf neue, leere Behälter werden von der Vorrichtung unter die Füllventile bewegt. Da die Vorrichtung eine sehr geringe Teilung bzw. einen sehr geringen Teilungsabstand ermöglicht, kann der Wechsel vergleichsweise wenig Zeit erfordern, sodass die Leistung erhöht werden kann.

Vorzugsweise kann sich der Begriff "Steuereinheit" auf eine Elektronik (z. B. ausgeführt als eine Treiberschaltung oder mit Mikroprozessor(en) und Datenspeicher) beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

Ein weiterer Aspekt der vorliegenden Erfindung betrifft ein Verfahren zum Transportieren von Gegenständen, vorzugsweise Behältern, mit unterschiedlichen Formaten mittels einer Vorrichtung wie hierin offenbart, die mindestens eine (z. B. geschlossene bzw. umlaufende) Führungsbahn sowie erste Bewegungsvorrichtungen und zweite Bewegungsvorrichtungen zum Transportieren der Gegenstände aufweist, wobei die ersten Bewegungsvorrichtungen und die zweiten Bewegungsvorrichtungen abwechselnd hintereinander entlang der mindestens einen Führungsbahn geführt und individuell antreibbar sind, vorzugsweise mittels eines Langstator-Linearantriebs oder eines Kurzstator-Linearantriebs. Das Verfahren weist ein Transportieren eines Gegenstands mit einem ersten Format mittels eines Paares aus einer der ersten Bewegungsvorrichtungen und einer der zweiten Bewegungsvorrichtungen auf (z. B. im ersten Betriebsmodus und/oder gesteuert durch eine Steuereinheit der Vorrichtung), wobei die erste Bewegungsvorrichtung in einer Richtung des Transportpfads vor der zweiten Bewegungsvorrichtung des Paares positioniert ist. Das Verfahren weist ein Transportieren eines Gegenstands mit einem zweiten Format, das sich von dem ersten Format, vorzugsweise in einer Größe und/oder in einer Form, unterscheidet, mittels eines Paares aus einer der ersten Bewegungsvorrichtungen und einer der zweiten Bewegungsvorrichtungen auf (z. B. im zweiten Betriebsmodus und/oder gesteuert durch eine Steuereinheit der Vorrichtung), wobei die zweite Bewegungsvorrichtung in der Richtung des Transportpfads vor der ersten Bewegungsvorrichtung des Paares positioniert ist. Vorteilhaft können mit dem Verfahren die gleichen Vorteile erzielt werden, die bereits bezüglich der entsprechenden Vorrichtung beschrieben wurden.

Ein weiterer Aspekt der vorliegenden Offenbarung betrifft ein Verfahren zum Transportieren von Gegenständen, vorzugsweise Behältern, mit unterschiedlichen Formaten mittels einer Vorrichtung, vorzugsweise wie hierin beschrieben, die mindestens eine (z. B. geschlossene bzw. umlaufende) Führungsbahn und mehrere Bewegungsvorrichtungen zum Transportieren der Gegenstände entlang eines Transportpfads aufweist, wobei die mehreren Bewegungsvorrichtungen entlang der mindestens einen Führungsbahn geführt und individuell antreibbar sind, vorzugsweise mittels eines Langstator-Linearantriebs oder eines Kurzstator-Linearantriebs. Das Verfahren weist ein Transportieren von Gegenständen unterschiedlicher Formate jeweils mittels einer Gruppe aus mindestens drei Bewegungsvorrichtungen (z. B. genau drei oder genau vier Bewegungsvorrichtungen), die gemeinsam einen Gegenstand zwischen sich positionieren, vorzugsweise einspannen, entlang des Transportpfads bis hin zu einem Übergabebereich der Vorrichtung zum Übergeben des Gegenstands auf, wobei zum Transportieren des Gegenstands eine Anordnung der mindestens drei Bewegungsvorrichtungen zueinander abhängig von einem jeweiligen Format des zu transportierenden Gegenstands eingestellt ist, vorzugsweise zum Erzielen einer (z. B flexiblen) Dreipunkt-Lagerung oder einer (z. B flexiblen) Vierpunkt-Lagerung. Vorteilhaft können mit dem Verfahren die gleichen Vorteile erzielt werden, die bereits bezüglich der entsprechenden Vorrichtung beschrieben wurden.

Hierin verwendete Ausdrücke, die sich auf eine Relation zur Richtung des Transportpfads beziehen, sind vorzugsweise derart zu verstehen, dass die genannte Relation sich auf die Richtung desjenigen Abschnitts des Transportpfads bezieht, an der die jeweilige Bewegungsvorrichtung positioniert ist.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine Draufsicht auf einen Abschnitt einer Vorrichtung zum Transportieren von Gegenständen in einem ersten Betriebsmodus gemäß einem Ausführungsbeispiel der vorliegenden Offenbarung;
- Figur 2: eine Draufsicht auf den Abschnitt der Vorrichtung von Figur 1 in einem zweiten Betriebsmodus gemäß einem Ausführungsbeispiel der vorliegenden Offenbarung;
- Figur 3: eine Seitenansicht auf einen Abschnitt einer Vorrichtung zum Transportieren von Gegenständen in einem ersten Betriebsmodus gemäß einem nicht erfindungsmäßen Ausführungsbeispiel der vorliegenden Offenbarung;
- Figur 4: eine Seitenansicht auf den Abschnitt der Vorrichtung von Figur 3 in einem zweiten Betriebsmodus gemäß einem nicht erfindungsmäßen Ausführungsbeispiel der vorliegenden Offenbarung;
- Figur 5: eine Seitenansicht auf einen Abschnitt einer Vorrichtung zum Transportieren von Gegenständen gemäß einem nicht erfindungsmäßen Ausführungsbeispiel der vorliegenden Offenbarung; und
- Figur 6: eine Seitenansicht auf einen Abschnitt einer Vorrichtung zum Transportieren von Gegenständen gemäß einem nicht erfindungsmäßen Ausführungsbeispiel der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

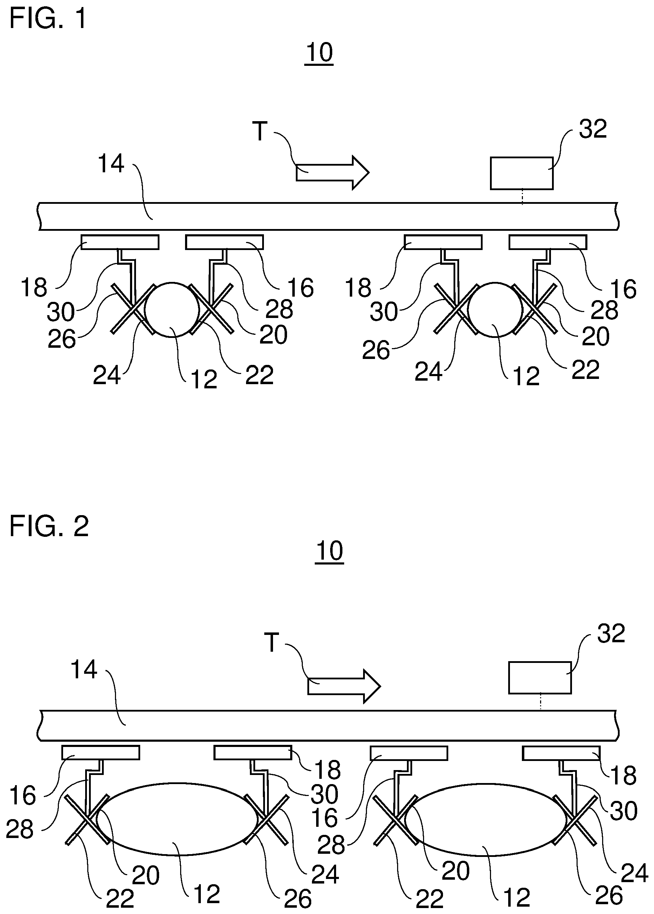

Die Figuren 1 und 2 zeigen einen Abschnitt einer Vorrichtung 10 zum Transportieren von Gegenständen 12 entlang eines Transportpfads bzw. in einer Transportrichtung T.

Die Gegenstände 12 sind bevorzugt als Behälter ausgeführt. Es können allerdings auch andere Gegenstände 12 transportiert werden. Besonders bevorzugt ist die Vorrichtung 10 in einer Behälterbehandlungsanlage umfasst. In der Behälterbehandlungsanlage können die als Behälter ausgeführten Gegenstände 12 von der Vorrichtung 10 bspw. zu und/oder weg von Behandlungsstationen transportiert werden.

Es ist bspw. möglich, dass mehrere Behandlungsstationen, z. B. Füll-, Verschließ- oder Etikettierstationen, nebeneinander entlang eines Abschnitts der Vorrichtung 10 angeordnet sind. Die Vorrichtung 10 kann die bevorzugt als Behälter ausgeführten Gegenstände 12 zu den mehreren Behandlungsstationen transportieren und/oder während der Behandlung durch die Behandlungsstationen halten und/oder nach der Behandlung abtransportieren.

Die Vorrichtung 10 weist mindestens eine Führungsbahn 14 und mehrere Bewegungsvorrichtungen 16, 18 zum Transportieren der Gegenstände 12 entlang des Transportpfads T auf.

Die mindestens eine Führungsbahn 14 ist bevorzugt geschlossen bzw. umlaufend. Beispielsweise kann die mindestens eine Führungsbahn 14 kreisförmig, ringförmig, oval oder elliptisch sein.

Die Bewegungsvorrichtungen 16, 18 sind an der mindestens einen Führungsbahn 14 geführt und bevorzugt getragen. Beispielsweise können die Bewegungsvorrichtungen 16, 18 jeweils mindestens ein Führungselement (nicht dargestellt) aufweisen, das die jeweilige Bewegungsvorrichtung 16, 18 an der mindestens einen Führungsbahn 14 führt. Die Führungselemente können bspw. als Rollen, die entlang der mindestens einen Führungsbahn 14 abrollen, oder Gleitschuhe, die entlang der mindestens einen Führungsbahn 14 gleiten, ausgeführt sein.

Die Bewegungsvorrichtungen 16, 18 sind individuell bzw. unabhängig voneinander entlang der mindestens einen Führungsbahn 14 bewegbar bzw. antreibbar. Bevorzugt kann die Vorrichtung 10 ein Linearmotorsystem (nicht dargestellt), z. B. Langstator-Linearmotorsystem oder Kurzstator-Linearmotorsystem, zum individuellen Antreiben der Bewegungsvorrichtungen 16, 18 aufweisen.

Beispielsweise können bei einem Langstator-Linearmotorsystem mehrere Langstatorsegmente, die jeweils mehrere Elektromagnete aufweisen, entlang der mindestens einen Führungsbahn 14 angeordnet sein. Die Langstatorsegmente können in magnetische Wechselwirkung mit Permanentmagneten der Bewegungsvorrichtungen 16, 18 treten, um die Bewegungsvorrichtungen 16, 18 entlang der mindestens einen Führungsbahn 14 individuell anzutreiben bzw. zu bewegen. Hingegen können bei einem Kurzstator-Linearmotorsystem bspw. mehrere Permanentmagnete entlang der mindestens einen Führungsbahn 14 angeordnet sein und die Bewegungsvorrichtungen 16, 18 jeweils mindestens einen Elektromagneten aufweisen, die zum Antreiben der Bewegungsvorrichtungen 16, 18 in magnetische Wechselwirkung mit den Permanentmagneten treten können. Es sind jedoch auch gänzlich andere individuelle Antriebskonzepte für die Bewegungsvorrichtungen 16, 18 denkbar, z. B. je Bewegungsvorrichtung 16, 18 mindestens ein Elektromotor, der Rollen der Bewegungsvorrichtungen 16, 18 antreibt.

Die Bewegungsvorrichtungen 16, 18 weisen erste Bewegungsvorrichtungen 16 und zweite Bewegungsvorrichtungen 18 auf. Die ersten Bewegungsvorrichtungen 16 und die zweiten Bewegungsvorrichtungen 18 sind abwechselnd hintereinander entlang der mindestens einen Führungsbahn 14, vorzugsweise an derselben Führungsbahn 14, geführt.

Je eine erste Bewegungsvorrichtung 16 und eine zweite Bewegungsvorrichtung 18 bilden ein Paar zum Transportieren (mindestens) eines Gegenstands 12. Aufeinanderfolgende Gegenstände 12 können von aufeinanderfolgenden Paaren transportiert werden.

Der Gegenstand 12 kann beim Transport entlang des Transportpfads T zwischen der ersten Bewegungsvorrichtung 16 und der zweiten Bewegungsvorrichtung 18 des jeweiligen Paares positioniert sein. Eine von den Bewegungsvorrichtungen 16, 18 eines Paares kann den Gegenstand 12 bezüglich des Transportpfads T bspw. von vorne abstützen, und die andere von den Bewegungsvorrichtungen 16, 18 des Paares kann den Gegenstand 12 bezüglich des Transportpfads T bspw. von hinten abstützen.

Die Bewegungsvorrichtungen 16, 18 eines Paares können den Gegenstand 12 bspw. zwischen sich klemmen bzw. einspannen. Die Bewegungsvorrichtungen 16, 18 können den Gegenstand 12 hängend oder tragend transportieren, z. B. im Neckhandling bei Behältern oder durch Einklemmen eines Körpers des Gegenstands 12. Es ist allerdings auch möglich, dass die Bewegungsvorrichtungen 16, 18 den Gegenstand 12 schiebend über eine bspw. planare Grundfläche schieben (nicht dargestellt), z. B. im Basehandling bei Behältern.

Bevorzugt unterscheiden sich die ersten Bewegungsvorrichtungen 16 von den zweiten Bewegungsvorrichtungen 18. Der Unterschied liegt vorzugsweise darin, wie und/oder wo die jeweilige Bewegungsvorrichtung 16, 18 den Gegenstand 12 abstützen kann. Die ersten Bewegungsvorrichtungen 16 können sich von den zweiten Bewegungsvorrichtungen 18 in Bezug auf eine Anordnung und/oder Konfiguration einer Abstützung für die Gegenstände 12 unterscheiden.

Im Ausführungsbeispiel der Figuren 1 und 2 unterscheiden sich die ersten Bewegungsvorrichtungen 16 und die zweiten Bewegungsvorrichtungen 18 in Bezug auf die Anordnung der Abstützung für die Gegenstände 12, wie nachfolgend im Detail erläutert ist.

Die ersten Bewegungsvorrichtungen 16 weisen jeweils einen ersten Stützabschnitt 20 und einen zweiten Stützabschnitt 22 zum Abstützen der Gegenstände 12 auf. Der erste Stützabschnitt 20 ist in Richtung des Transportpfads T gerichtet bzw. gewandt. Der zweite Stützabschnitt 22 ist entgegengesetzt zu der Richtung des Transportpfads T gerichtet bzw. gewandt. Die Stützabschnitte 20, 22 können entgegengesetzt zueinander gerichtet sein.

Die zweiten Bewegungsvorrichtungen 18 weisen jeweils einen ersten Stützabschnitt 24 und einen zweiten Stützabschnitt 26 zum Abstützen der Gegenstände 12 auf. Der erste Stützabschnitt 24 ist in Richtung des Transportpfads T gerichtet bzw. gewandt sein. Der zweite Stützabschnitt 26 ist entgegengesetzt zu der Richtung des Transportpfads T gerichtet bzw. gewandt. Die Stützabschnitte 24, 26 können entgegengesetzt zueinander gerichtet sein.

Der erste Stützabschnitt 20 der ersten Bewegungsvorrichtung 16 kann mit dem zweiten Stützabschnitt 26 der zweiten Bewegungsvorrichtung 18 zum Transportieren eines Gegenstands 12 zusammenwirken, wie in Figur 2 dargestellt ist. Der zweite Stützabschnitt 22 der ersten Bewegungsvorrichtung 16 kann mit dem ersten Stützabschnitt 24 der zweiten Bewegungsvorrichtung 18 zum Transportieren eines Gegenstands 12 zusammenwirken, wie in Figur 1 dargestellt ist.

Die Stützabschnitte 20, 22, 24 und 26 sind baugleich ausgeführt.

Die Stützabschnitte 20, 22, 24 und/oder 26 können beispielsweise V-förmig ausgeführt sein, wie in Figur 1 dargestellt ist. Es ist auch möglich, dass die Stützabschnitte 20, 22, 24 und/oder 26 anders ausgeführt sind, zum Beispiel ringsegmentförmig oder planar.

Die ersten Stützabschnitte 20 der ersten Bewegungsvorrichtungen 16 können zurückversetzt bezüglich der Richtung des Transportpfads T sein, und die zweiten Stützabschnitte 26 der zweiten Bewegungsvorrichtungen 18 können zurückversetzt zu einer Richtung entgegengesetzt zu der Richtung des Transportpfads T sein, wie in Figur 1 dargestellt ist. Alternativ oder zusätzlich können die zweiten Stützabschnitte 22 der ersten Bewegungsvorrichtungen 16 vorstehend zu einer Richtung entgegengesetzt zu der Richtung des Transportpfads T sein, und die ersten Stützabschnitte 24 der zweiten Bewegungsvorrichtungen 18 können vorstehend bezüglich der Richtung des Transportpfads T sein, wie ebenfalls in Figur 1 dargestellt ist.

Beispielsweise können die Bewegungsvorrichtungen 16, 18 jeweils einen Tragarm 28, 30 aufweisen. Bevorzugt können die Tragarme 28, 30 ausgehend von einer jeweiligen Basis entgegengesetzt zueinander gekröpft sein.

Der Tragarm 28 kann den ersten Stützabschnitt 20 und den zweiten Stützabschnitt 22 der jeweiligen ersten Bewegungsvorrichtung 16 tragen, bevorzugt an einem äußeren Ende des Tragarms 28. Der Tragarm 30 kann den ersten Stützabschnitt 24 und den zweiten Stützabschnitt 26 der jeweiligen zweiten Bewegungsvorrichtung 18 tragen, bevorzugt an einem äußeren Ende des Tragarms 30. Der Tragarm 28 kann ausgehend von einer Basis des Tragarms 28 hin zu einem die Stützabschnitte 20, 22 tragenden Ende des Tragarms 30 entgegengesetzt zu der Richtung des Transportpfads T gekröpft sein. Der Tragarm 30 kann ausgehend von einer Basis des Tragarms 30 hin zu einem die Stützabschnitte 24, 26 tragenden Ende des Tragarms 30 hin zu der Richtung des Transportpfads T gekröpft sein.

Es ist allerdings beispielsweise auch möglich, dass die Bewegungsvorrichtungen 16 und/oder 18 jeweils zwei Tragarme aufweisen (nicht in den Figuren dargestellt), von denen einer den jeweils ersten Stützabschnitt 20 bzw. 24 trägt und der andere den jeweils zweiten Stützabschnitt 22 bzw. 26 trägt. Der Tragarm, der den ersten Stützabschnitt 20 trägt, kann ausgehend von einer Basis bevorzugt entgegengesetzt zu der Richtung des Transportpfads T gekröpft sein. Der Tragarm, der den zweiten Stützabschnitt 22 trägt, kann ausgehend von einer Basis bevorzugt entgegengesetzt zu der Richtung des Transportpfads T gekröpft sein. Der Tragarm, der den ersten Stützabschnitt 24 trägt, kann ausgehend von einer Basis bevorzugt hin zu der Richtung des Transportpfads T gekröpft sein. Der Tragarm, der den zweiten Stützabschnitt 26 trägt, kann ausgehend von einer Basis bevorzugt hin zu der Richtung des Transportpfads T gekröpft sein.

Eine Bewegung der Bewegungsvorrichtungen 16, 18 kann von einer Steuereinheit 32 gesteuert sein. Beispielsweise kann die Steuereinheit 32 eine elektrische Energieversorgung der Elektromagnete des die Bewegungsvorrichtungen 16, 18 antreibenden Linearantriebs (zum Beispiel Langstator-Linearantrieb oder Kurzstator-Linearantrieb) wie gewünscht steuern, um die individuelle Bewegung der Bewegungsvorrichtungen 16, 18 zu bewirken.

Die Steuereinheit 32 ist dazu konfiguriert, die Vorrichtung 10 wahlweise in einem ersten Betriebsmodus und in einem zweiten Betriebsmodus zu betreiben. Die Figur 1 zeigt den Betrieb im ersten Betriebsmodus. Die Figur 2 zeigt den Betrieb im zweiten Betriebsmodus. Die Steuereinheit 32 kann die Vorrichtung 10 zum Transportieren von Gegenständen 12 eines ersten Formats in dem ersten Betriebsmodus betreiben, siehe Figur 1, und zum Transportieren von Gegenständen 12 eines zweiten Formats in dem zweiten Betriebsmodus betreiben, siehe Figur 2. Das erste Format kann sich von dem zweiten Format unterscheiden, z. B. in Bezug auf eine Form und/oder eine Größe der Gegenstände. Beispielsweise können die im ersten Betriebsmodus transportierten Gegenstände 12 kleiner sein oder einen kleineren Durchmesser aufweisen als die im zweiten Betriebsmodus transportierten Gegenstände 12.

Im ersten Betriebsmodus und im zweiten Betriebsmodus werden die Gegenstände 12 jeweils von einem Paar aus je einer der ersten Bewegungsvorrichtungen 16 und einer der zweiten Bewegungsvorrichtungen 18 transportiert. Die Paare unterscheiden sich zwischen dem ersten Betriebsmodus und dem zweiten Betriebsmodus.

Im ersten Betriebsmodus sind die Paare derart gebildet, dass die erste Bewegungsvorrichtung 16 in der Richtung des Transportpfads T vor der zweiten Bewegungsvorrichtung 18 des jeweiligen Paares positioniert ist. Die vordere, erste Bewegungsvorrichtung 16 des jeweiligen Paares kann den jeweiligen Gegenstand 12 von vorne bezüglich der Richtung des Transportpfads T abstützen, wohingegen die hintere, zweite Bewegungsvorrichtung 18 des jeweiligen Paares den jeweiligen Gegenstand 12 von hinten bezüglich der Richtung des Transportpfads T abstützen kann. Beispielsweise können die Gegenstände 12 jeweils zwischen dem zweiten Stützabschnitt 22 der ersten Bewegungsvorrichtungen 16 und dem ersten Stützabschnitt 24 der zweiten Bewegungsvorrichtungen 18 abgestützt sein.

Im zweiten Betriebsmodus sind die Paare derart gebildet, dass die zweite Bewegungsvorrichtung 18 in der Richtung des Transportpfads T vor der ersten Bewegungsvorrichtung 16 des jeweiligen Paares positioniert ist. Die vordere, zweite Bewegungsvorrichtung 18 des jeweiligen Paares kann den jeweiligen Gegenstand 12 von vorne bezüglich der Richtung des Transportpfads T abstützen, wohingegen die hintere, erste Bewegungsvorrichtung 16 des jeweiligen Paares den jeweiligen Gegenstand 12 von hinten bezüglich der Richtung des Transportpfads T abstützen kann. Beispielsweise können die Gegenstände 12 jeweils zwischen dem zweiten Stützabschnitt 26 der zweiten Bewegungsvorrichtungen 18 und dem ersten Stützabschnitt 20 der ersten Bewegungsvorrichtungen 16 abgestützt sein.

Die beispielhaft beschriebene unterschiedliche Kröpfung der Tragarme 28, 30 kann insbesondere im zweiten Betriebsmodus eine geringere Ausdehnung der jeweiligen Paare inklusive dem jeweils transportieren Gegenstand 12 ermöglichen, als dies ohne Kröpfung möglich wäre. Damit kann eine möglichst geringe Teilung beim Transport großer Gegenstände ermöglicht werden.

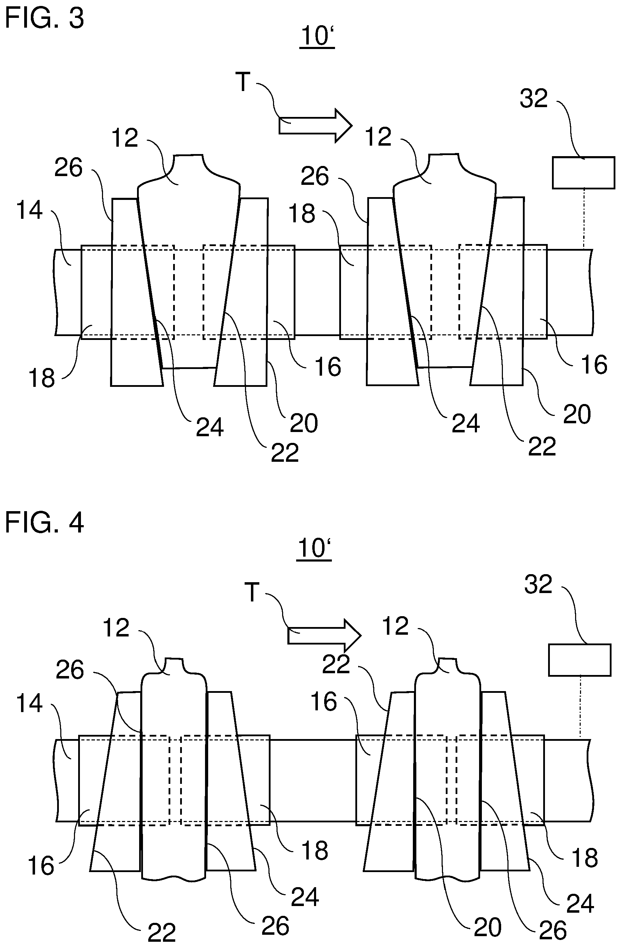

Die Figuren 3 und 4 zeigen eine weitere Vorrichtung 10' zum Transportieren von Gegenständen 12 in einem ersten Betriebsmodus (siehe Figur 3) und in einem zweiten Betriebsmodus (siehe Figur 4).

Die Vorrichtung 10' ist ähnlich zu der Vorrichtung 10 der Figuren 1 und 2 ausgeführt, sodass nachfolgend insbesondere auf Modifikationen der Vorrichtung 10' gegenüber der Vorrichtung 10 hingewiesen wird.

Bevorzugt unterscheiden sich die ersten Bewegungsvorrichtungen 16 von den zweiten Bewegungsvorrichtungen 18 der Vorrichtung 10' in Bezug auf die Konfiguration bzw. Konstruktion einer Abstützung für die Gegenstände 12.

Die Stützabschnitte 20 und 22 sind konstruktiv unterschiedlich ausgeführt, und die Stützabschnitte 24 und 26 können ebenfalls konstruktiv unterschiedlich ausgeführt sein. Bevorzugt sind die Stützabschnitte 20 und 26 baugleich, und die Stützabschnitte 22 und 24 sind ebenfalls baugleich.

Beispielsweise können die Stützabschnitte 20 und 26 als planare oder ringsegmentförmige, vertikale Stützflächen ausgeführt sein. Die Stützabschnitte 22 und 24 können bspw. als planare oder kegelsegmentförmige Stützflächen ausgeführt sein. Vorteilhaft können damit im ersten Betriebsmodus bspw. sich verjüngende oder zumindest abschnittsweise konische Gegenstände 12 transportiert werden, und im zweiten Betriebsmodus können zylindrische oder quaderförmige Gegenstände 12 transportiert werden.

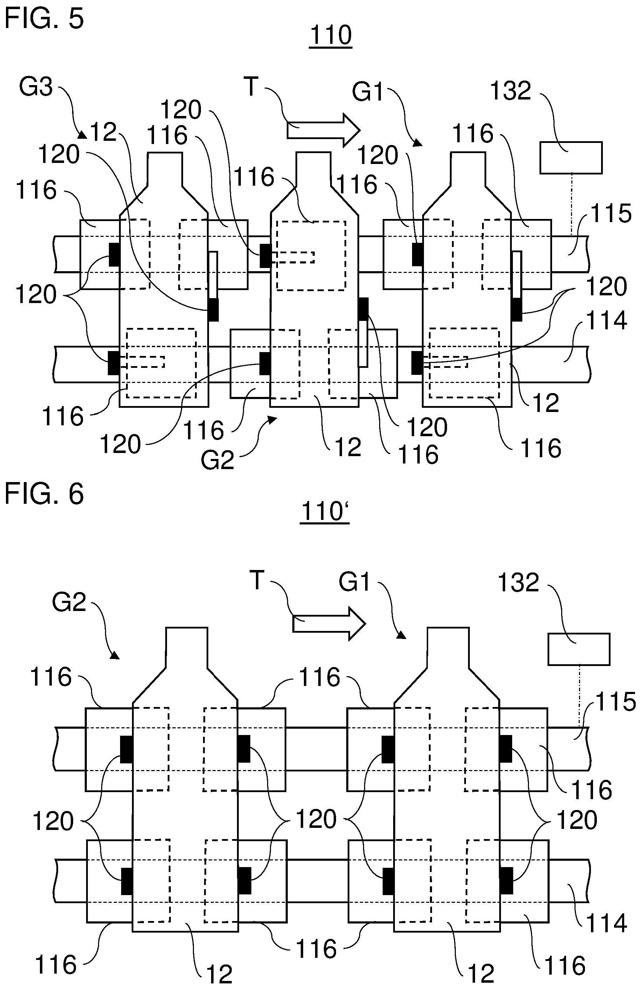

Die Ausführungsbeispiele der Figuren 1 bis 4 ermöglichen den Transport von Gegenständen unterschiedlicher Formate in unterschiedlichen Betriebsmodi, wie beschrieben wurde. Nachfolgend sind unter Bezugnahme auf die Figuren 5 und 6 weitere Vorrichtungen 110 bzw. 110' beschrieben, die ebenfalls einen Transport von Gegenständen 12 mit unterschiedlichsten Formaten ermöglichen; dies aber auf eine andere Weise als die Ausführungsbeispiele der Figuren 1 bis 4. Es versteht sich, dass die unter Bezugnahme auf die Figuren 5 und 6 beschriebenen Techniken mit den Techniken, die unter Bezugnahme auf die Figuren 1 bis 4 beschrieben sind, kombinierbar sind.

Die Figur 5 zeigt einen Abschnitt einer Vorrichtung 110 zum Transportieren von Gegenständen 12. Die Gegenstände 12 sind bevorzugt als Behälter ausgeführt. Es können allerdings auch andere Gegenstände 12 transportiert werden. Besonders bevorzugt ist die Vorrichtung 110 in einer Behälterbehandlungsanlage umfasst, wie dies bspw. bereits unter Bezugnahme auf Figur 1 beschrieben wurde.

Die Vorrichtung 110 weist mindestens eine Führungsbahn 114, 115 und mehrere Bewegungsvorrichtungen 116 zum Transportieren der Gegenstände 12 entlang des Transportpfads T auf.

Die mindestens eine Führungsbahn 114, 115 ist bevorzugt geschlossen bzw. umlaufend. Beispielsweise kann die mindestens eine Führungsbahn 114, 115 kreisförmig, ringförmig, oval oder elliptisch sein. Bevorzugt ist eine erste Führungsbahn 114 und eine zweite Führungsbahn 115 umfasst, die sich im Wesentlichen parallel erstrecken und bspw. übereinander angeordnet sind.

Die Bewegungsvorrichtungen 116 sind an der mindestens einen Führungsbahn 114, 115 geführt und bevorzugt getragen, wie dies bspw. bereits unter Bezugnahme auf Figur 1 beschrieben wurde.

Die Bewegungsvorrichtungen 116 sind individuell bzw. unabhängig voneinander entlang der mindestens einen Führungsbahn 114, 115 bewegbar bzw. antreibbar. Bevorzugt kann die Vorrichtung 110 mindestens ein Linearmotorsystem (nicht dargestellt), z. B. Langstator-Linearmotorsystem oder Kurzstator-Linearmotorsystem, zum individuellen Antreiben der Bewegungsvorrichtungen 116 aufweisen. Für detaillierte Ausführungen zum Antrieb der Bewegungsvorrichtungen 116 wird wiederum auf die entsprechenden Ausführungen zur Figur 1 verwiesen. Eine Steuerung des Antriebs der Bewegungsvorrichtungen 116 kann von einer Steuereinheit 132 durchgeführt werden.

Es ist möglich, dass der ersten Führungsbahn 114 ein erstes Linearmotorsystem, z. B. Langstator-Linearmotorsystem oder Kurzstator-Linearmotorsystem, zum individuellen Antreiben derjenigen Bewegungsvorrichtungen 116, die entlang der ersten Führungsbahn 114 geführt sind, zugeordnet ist.

Es ist auch möglich, dass der zweiten Führungsbahn 115 ein zweites Linearmotorsystem, z. B. Langstator-Linearmotorsystem oder Kurzstator-Linearmotorsystem, zum individuellen Antreiben derjenigen Bewegungsvorrichtungen 116, die entlang der zweiten Führungsbahn 115 geführt sind, zugeordnet ist.

Beispielsweise können die Bewegungsvorrichtungen 116 jeweils einen Stützabschnitt 120 zum Abstützen des Gegenstands 12 aufweisen. Die Stützabschnitte 120 der drei Bewegungsvorrichtungen 116 der jeweiligen Gruppen können den Gegenstand an unterschiedlichen Stellen abstützen. Die Stützabschnitte 120 können bspw. V-förmig, ringsegmentförmig oder planar ausgeführt sein. Die Stützabschnitte 120 können bevorzugt von einem Tragarm der jeweiligen Bewegungsvorrichtung 116 getragen sein.

Die Steuereinheit 132 kann dazu konfiguriert sein, die mehreren Bewegungsvorrichtungen 116 derart zu steuern, dass jeweils eine Gruppe G1, G2, G3 aus drei der mehreren Bewegungsvorrichtungen 116 gemeinsam einen zwischen sich positionierten, vorzugsweise eingespannten, Gegenstand 12 entlang des Transportpfads T bis hin zu einem Übergabebereich der Vorrichtung 110 zum Übergeben des Gegenstands 12, z. B. zu einem weiteren Förderer oder zu einer Behandlungsstation, transportiert.

Der Gegenstand 12 ist bevorzugt in einer Dreipunkt-Lagerung von den drei Bewegungsvorrichtungen 116 (bzw. von deren Stützabschnitten 120) der jeweiligen Gruppe G1, G2, G3 gehalten oder gestützt. Die Stützabschnitte 120 der drei Bewegungsvorrichtungen 116 der Gruppe G1, G2, G3 können den Gegenstand 12 bevorzugt an unterschiedlichen Höhenpositionen abstützen. Beispielsweise können mit den drei Stützabschnitten 120 eine Schulter, eine Mittelabschnitt und ein Bodenabschnitt des als Behälter ausgeführten Gegenstands 12 abgestützt werden.

Die Bewegungsvorrichtungen 116 einer Gruppe können den Gegenstand 12 bspw. zwischen sich klemmen bzw. einspannen. Die Bewegungsvorrichtungen 116 können den Gegenstand 12 hängend oder tragend transportieren, z. B. im Neckhandling bei Behältern oder durch Einklemmen eines Körpers des Gegenstands 12. Es ist allerdings auch möglich, dass die Bewegungsvorrichtungen 116 den Gegenstand 12 schiebend über eine bspw. planare Grundfläche schieben (nicht dargestellt), z. B. im Basehandling bei Behältern.

Der Ausschnitt von Figur 5 zeigt drei Gruppen G1, G2, G3 mit je drei Bewegungsvorrichtungen 116. Um eine möglichst enge Teilung zu erreichen, können die Gruppen G1, G2, G3 bspw. wie folgt gebildet sein.

Bei der ersten Gruppe G1 kann eine der drei Bewegungsvorrichtungen 116 an der ersten Führungsbahn 114 geführt sein und die anderen zwei Bewegungsvorrichtungen 116 können an der zweiten Führungsbahn 115 geführt sein.

Bei der zweiten Gruppe G2, die der ersten Gruppe G1 bezüglich der Richtung des Transportpfads T direkt nachfolgen kann, können zwei der drei Bewegungsvorrichtungen 116 an der ersten Führungsbahn 114 geführt sein und die andere Bewegungsvorrichtung 116 kann an der zweiten Führungsbahn 115 geführt sein.

Die dritte Gruppe G3, die der zweiten Gruppe G2 bezüglich der Richtung des Transportpfads T direkt nachfolgen kann, kann wiederum wie die erste Gruppe G1 gebildet sein, usw.

Es können entlang der Richtung des Transportpfads T abwechselnd Gruppen wie die erste Gruppe G1 und wie die zweite Gruppe G2 gebildet sein.

Die Figur 6 zeigt eine weitere Vorrichtung 110', die gegenüber der Vorrichtung 110 insbesondere wie folgt modifiziert ist.

Die Steuereinheit 132 kann dazu konfiguriert sein, die mehreren Bewegungsvorrichtungen 116 derart zu steuern, dass jeweils eine Gruppe G1, G2 aus vier der mehreren Bewegungsvorrichtungen 116 gemeinsam einen zwischen sich positionierten, vorzugsweise eingespannten, Gegenstand 12 entlang des Transportpfads T bis hin zu einem Übergabebereich der Vorrichtung 110 zum Übergeben des Gegenstands 12, z. B. zu einem weiteren Förderer oder zu einer Behandlungsstation, transportiert.

Der Gegenstand 12 ist bevorzugt in einer Vierpunkt-Lagerung von den vier Bewegungsvorrichtungen 116 (bzw. von deren Stützabschnitten 120) der jeweiligen Gruppe G1, G2 gehalten oder gestützt. Die Stützabschnitte 116 der vier Bewegungsvorrichtungen 116 der Gruppe G1, G2 können den Gegenstand 12 bevorzugt zumindest teilweise an unterschiedlichen Höhenpositionen abstützen.

Die Vorrichtung 110 und 110' der Figuren 5 und 6 können den Transport unterschiedlicher Formate der Gegenstände 12 dadurch unterstützen, dass eine Anordnung der drei oder vier Bewegungsvorrichtungen 116 der jeweiligen Gruppe G1, G2, G3 zueinander abhängig von dem jeweiligen Format des zu transportierenden Gegenstands 12 von der Steuereinheit 132 eingestellt wird.

### Bezugszeichenliste

- 10: Vorrichtung zum Transportieren
- 12: Gegenstand
- 14: Führungsbahn
- 16: erste Bewegungsvorrichtung
- 18: zweite Bewegungsvorrichtung
- 20: erster Stützabschnitt
- 22: zweiter Stützabschnitt
- 24: erster Stützabschnitt
- 26: zweiter Stützabschnitt
- 28: Tragarm
- 30: Tragarm
- 32: Steuereinheit

- 110: Vorrichtung zum Transportieren
- 114: Führungsbahn
- 115: Führungsbahn
- 116: Bewegungsvorrichtung
- 120: Stützabschnitt
- 132: Steuereinheit

- T: Transportpfad
- G1: erste Gruppe
- G2: zweite Gruppe
- G3: dritte Gruppe

## Patentansprüche

1. Vorrichtung (10) zum Transportieren von Gegenständen (12), vorzugsweise Behältern, entlang eines Transportpfads (T), aufweisend:
mindestens eine Führungsbahn (14);
erste Bewegungsvorrichtungen (16) und zweite Bewegungsvorrichtungen (18) zum Transportieren der Gegenstände (12), wobei die ersten Bewegungsvorrichtungen (16) und die zweiten Bewegungsvorrichtungen (18) abwechselnd hintereinander entlang der mindestens einen Führungsbahn (14) geführt und individuell antreibbar sind, vorzugsweise mittels eines Langstator-Linearantriebs oder eines Kurzstator-Linearantriebs, und
eine Steuereinheit (32), die dazu konfiguriert ist, die Vorrichtung (10) in einem ersten Betriebsmodus und in einem zweiten Betriebsmodus zu betreiben, wobei:
- in dem ersten Betriebsmodus und in dem zweiten Betriebsmodus die Gegenstände (12) jeweils von Paaren, die jeweils aus einer der ersten Bewegungsvorrichtungen (16) und einer der zweiten Bewegungsvorrichtungen (18) gebildet sind, transportiert werden,
- in dem ersten Betriebsmodus die Paare derart gebildet sind, dass die erste Bewegungsvorrichtung (16) in einer Richtung des Transportpfads (T) vor der zweiten Bewegungsvorrichtung (18) des jeweiligen Paares positioniert ist, und
- in dem zweiten Betriebsmodus die Paare derart gebildet sind, dass die zweite Bewegungsvorrichtung (18) in der Richtung des Transportpfades (T) vor der ersten Bewegungsvorrichtung (16) des jeweiligen Paares positioniert ist,
wobei:
die ersten Bewegungsvorrichtungen (16) und die zweiten Bewegungsvorrichtungen (18) jeweils einen ersten Stützabschnitt (20, 24), der in der Richtung des Transportpfads (T) gerichtet ist, und einen zweiten Stützabschnitt (22, 26), der entgegengesetzt zu der Richtung des Transportpfads (T) gerichtet ist, zum Abstützen der Gegenstände (12) während des Transports aufweisen,
**dadurch gekennzeichnet, dass**
die ersten Stützabschnitte (20) der ersten Bewegungsvorrichtungen (16), die zweiten Stützabschnitte (22) der ersten Bewegungsvorrichtungen (16), die ersten Stützabschnitte (24) der zweiten Bewegungsvorrichtungen (18) und die zweiten Stützabschnitte (26) der zweiten Bewegungsvorrichtungen (18) baugleich ausgeführt sind.

2. Vorrichtung (10) nach Anspruch 1, wobei:
die Steuereinheit (32) dazu konfiguriert ist, die Vorrichtung (10) zum Transportieren von Gegenständen (12) eines ersten Formats in dem ersten Betriebsmodus und zum Transportieren von Gegenständen (12) eines zweiten Formats, das sich von dem ersten Format, vorzugsweise in einer Form und/oder einer Größe, unterscheidet, in dem zweiten Betriebsmodus zu betreiben.

3. Vorrichtung (10) nach Anspruch 1 oder Anspruch 2, wobei:
die ersten Bewegungsvorrichtungen (16) und die zweiten Bewegungsvorrichtungen (18) sich voneinander unterscheiden, vorzugsweise bezüglich einer Anordnung und/oder einer Konfiguration einer Abstützung für die Gegenstände (12).

4. Vorrichtung (10) nach einem der vorherigen Ansprüche, wobei:
die ersten Bewegungsvorrichtungen (16) und die zweiten Bewegungsvorrichtungen (18) jeweils den ersten, V-förmigen, ringsegmentförmigen oder planaren, Stützabschnitt (20, 24), der in der Richtung des Transportpfads (T) gerichtet ist, und den zweiten, V-förmigen, ringsegmentförmigen oder planaren, Stützabschnitt (22, 26), der entgegengesetzt zu der Richtung des Transportpfads (T) gerichtet ist, zum Abstützen der Gegenstände (12) während des Transports aufweisen,
wobei vorzugsweise
im ersten Betriebsmodus die Gegenstände (12) jeweils zwischen dem zweiten Stützabschnitt (22) der ersten Bewegungsvorrichtungen (16) und dem ersten Stützabschnitt (24) der zweiten Bewegungsvorrichtungen (18) abgestützt sind; und/oder
im zweiten Betriebsmodus die Gegenstände (12) jeweils zwischen dem ersten Stützabschnitt (20) der ersten Bewegungsvorrichtungen (16) und dem zweiten Stützabschnitt (26) der zweiten Bewegungsvorrichtungen (18) abgestützt sind.

5. Vorrichtung (10) nach einem der vorherigen Ansprüche, wobei:
die ersten Bewegungsvorrichtungen (16) und die zweiten Bewegungsvorrichtungen (18) jeweils einen Tragarm (28, 30) aufweisen, der den ersten Stützabschnitt (20, 24) und den zweiten Stützabschnitt (22, 26) der jeweiligen Bewegungsvorrichtung (16, 18) trägt, vorzugsweise am gleichen Ende des Tragarms (28, 30); und
die Tragarme (28) der ersten Bewegungsvorrichtungen (16) und die Tragarme (30) der zweiten Bewegungsvorrichtungen (18) entgegengesetzt zueinander gekröpft sind.

6. Behandlungsanlage zum Behandeln von Behältern, aufweisend eine Vorrichtung (10) nach einem der vorherigen Ansprüche.

7. Verfahren zum Transportieren von Gegenständen (12), vorzugsweise Behältern, mit unterschiedlichen Formaten mittels einer Vorrichtung (10) nach einem der Ansprüche 1 bis 5, wobei das Verfahren aufweist:
Transportieren eines Gegenstands (12) mit einem ersten Format mittels eines Paares aus einer der ersten Bewegungsvorrichtungen (16) und einer der zweiten Bewegungsvorrichtungen (18), wobei die erste Bewegungsvorrichtung (16) in einer Richtung des Transportpfads (T) vor der zweiten Bewegungsvorrichtung (18) des Paares positioniert ist; und
Transportieren eines Gegenstands (12) mit einem zweiten Format, das sich von dem ersten Format, vorzugsweise in einer Größe und/oder in einer Form, unterscheidet, mittels eines Paares aus einer der ersten Bewegungsvorrichtungen (16) und einer der zweiten Bewegungsvorrichtungen (18), wobei die zweite Bewegungsvorrichtung (18) in der Richtung des Transportpfads (T) vor der ersten Bewegungsvorrichtung (16) des Paares positioniert ist.

## Claims

1. A device (10) for transporting objects (12), preferably containers, along a transport path (T) having:
at least one guide track (14);
first movement devices (16) and second movement devices (18) for transporting the objects (12), wherein the first movement devices (16) and the second movement devices (18) are guided and individually drivable along the at least one guide track (14) alternately one behind the other, preferably by means of a long stator linear drive or a short stator linear drive, and
a control unit (32) which is configured to operate the device (10) in a first operating mode and in a second operating mode, wherein:
- in the first operating mode and in the second operating mode the objects (12) are transported in each case by pairs which are formed in each case from one of the first movement devices (16) and one of the second movement devices (18),
- in the first operating mode, the pairs are formed such that the first movement device (16) is positioned in a direction of the transport path (T) upstream of the second movement device (18) of the respective pair, and
- in the second operating mode, the pairs are formed such that the second movement device (18) is positioned in the direction of the transport path (T) upstream of the first movement device (16) of the respective pair
wherein:
the first movement devices (16) and the second movement devices (18) in each case have a first support portion (20, 24) which is oriented in the direction of the transport path (T) and a second support portion (22, 26) which is oriented opposing the direction of the transport path (T), for supporting the objects (12) during transport,
**characterized in that**
the first support portions (20) of the first movement devices (16), the second support portions (22) of the first movement devices (16), the first support portions (24) of the second movement devices (18) and the second support portions (26) of the second movement devices (18) are designed structurally the same.

2. The device (10) according to Claim 1, wherein:
the control unit (32) is configured to operate the device (10) for transporting objects (12) having a first format in the first operating mode and for transporting objects (12) having a second format, which differs from the first format, preferably in a shape and/or a size, in the second operating mode.

3. The device (10) according to Claim 1 or Claim 2, wherein:
the first movement devices (16) and the second movement devices (18) differ from one another, preferably relative to an arrangement and/or a configuration of a support for the objects (12).

4. The device (10) according to one of the preceding claims, wherein:
the first movement devices (16) and the second movement devices (18) in each case have the first, V-shaped, ring segment-shaped or planar, support portion (20, 24) which is oriented in the direction of the transport path (T) and the second, V-shaped, ring segment-shaped or planar, support portion (22, 26) which is oriented opposing the direction of the transport path (T), for supporting the objects (12) during transport,
wherein preferably
in the first operating mode, the objects (12) are supported in each case between the second support portion (22) of the first movement devices (16) and the first support portion (26) of the second movement devices (18); and/or
in the second operating mode, the objects (12) are supported in each case between the first support portion (20) of the first movement devices (16) and the second support portion (26) of the second movement devices (18).

5. The device (10) according to one of the preceding claims, wherein:
the first movement devices (16) and the second movement devices (18) in each case have a carrier arm (28, 30) which carries the first support portion (20, 24) and the second support portion (22, 26) of the respective movement device (16, 18), preferably at the same end of the carrier arm (28, 30); and
the carrier arms (28) of the first movement devices (16) and the carrier arms (30) of the second movement devices (18) are bent back in opposing directions to one another.

6. A container treatment system for treating containers, having a device (10) according to one of the preceding claims.

7. A method for transporting objects (12), preferably containers, having different formats by means of a device (10) according to one of Claims 1 to 5, wherein the method comprises:
transporting an object (12) having a first format by means of a pair consisting of one of the first movement devices (16) and one of the second movement devices (18), wherein the first movement device (16) is positioned in a direction of the transport path (T) upstream of the second movement device (18) of the pair; and
transporting an object (12) having a second format which differs from the first format, preferably in a size and/or in a shape, by means of a pair consisting of one of the first movement devices (16) and one of the second movement devices (18), wherein the second movement device (18) is positioned in the direction of the transport path (T) upstream of the first movement device (16) of the pair.

## Revendications

1. Dispositif (10) permettant de transporter des objets (12), de préférence des récipients, le long d'un chemin de transport (T), présentant :
au moins une voie de guidage (14) ;
des premiers dispositifs de déplacement (16) et des seconds dispositifs de déplacement (18) permettant de transporter les objets (12), dans lequel les premiers dispositifs de déplacement (16) et les seconds dispositifs de déplacement (18) sont guidés en alternance les uns derrière les autres le long de l'au moins une voie de guidage (14) et peuvent être entraînés individuellement, de préférence au moyen d'un entraînement linéaire à stator long ou d'un entraînement linéaire à stator court, et
une unité de commande (32) qui est configurée pour faire fonctionner le dispositif (10) dans un premier mode de fonctionnement et dans un second mode de fonctionnement, dans lequel :
- dans le premier mode de fonctionnement et dans le second mode de fonctionnement, les objets (12) sont transportés respectivement par paires formées respectivement par l'un des premiers dispositifs de déplacement (16) et l'un des seconds dispositifs de déplacement (18),
- dans le premier mode de fonctionnement, les paires sont formées de telle sorte que le premier dispositif de déplacement (16) est positionné avant le second dispositif de déplacement (18) de la paire respective dans une direction du chemin de transport (T), et
- dans le second mode de fonctionnement, les paires sont formées de telle sorte que le second dispositif de déplacement (18) est positionné avant le premier dispositif de déplacement (16) de la paire respective dans la direction du chemin de transport (T),
dans lequel :
les premiers dispositifs de déplacement (16) et les seconds dispositifs de déplacement (18) présentent respectivement une première section de soutien (20, 24) dirigée dans la direction du chemin de transport (T) et une seconde section de soutien (22, 26) dirigée à l'opposé de la direction du chemin de transport (T) pour le soutien des objets (12) pendant le transport,
**caractérisé en ce que**
les premières sections de soutien (20) des premiers dispositifs de déplacement (16), les secondes sections de soutien (22) des premiers dispositifs de déplacement (16), les premières sections de soutien (24) des seconds dispositifs de déplacement (18) et les secondes sections de soutien (26) des seconds dispositifs de déplacement (18) sont réalisées de manière à être identiques.

2. Dispositif (10) selon la revendication 1, dans lequel :
l'unité de commande (32) est configurée pour faire fonctionner dans le second mode de fonctionnement le dispositif (10) permettant de transporter des objets (12) d'un premier format dans le premier mode de fonctionnement et permettant de transporter des objets (12) d'un second format qui diffère du premier format, de préférence en termes de forme et/ou de taille.

3. Dispositif (10) selon la revendication 1 ou la revendication 2, dans lequel :
les premiers dispositifs de déplacement (16) et les seconds dispositifs de déplacement (18) diffèrent les uns des autres, de préférence en ce qui concerne un agencement et/ou une configuration d'un soutien pour les objets (12).

4. Dispositif (10) selon l'une des revendications précédentes, dans lequel :
les premiers dispositifs de déplacement (16) et les seconds dispositifs de déplacement (18) présentent respectivement la première section de soutien (20, 24) en forme de V, en forme de segment annulaire ou plane, dirigée dans la direction du chemin de transport (T), et la second section de soutien (22, 26) en forme de V, en forme de segment annulaire ou plane, dirigée dans la direction opposée à la direction du chemin de transport (T), pour le soutien des objets (12) pendant le transport,
dans lequel de préférence
dans le premier mode de fonctionnement, les objets (12) sont respectivement soutenus entre la seconde section de soutien (22) des premiers dispositifs de déplacement (16) et la première section de soutien (24) des seconds dispositifs de déplacement (18) ; et/ou
dans le second mode de fonctionnement, les objets (12) sont respectivement soutenus entre la première section de soutien (20) des premiers dispositifs de déplacement (16) et la seconde section de soutien (26) des seconds dispositifs de déplacement (18).

5. Dispositif (10) selon l'une des revendications précédentes, dans lequel :
les premiers dispositifs de déplacement (16) et les seconds dispositifs de déplacement (18) présentent respectivement un bras de support (28, 30) qui supporte la première section de soutien (20, 24) et la seconde section de soutien (22, 26) du dispositif de déplacement (16, 18) respectif, de préférence à la même extrémité du bras de support (28, 30) ; et
les bras de support (28) des premiers dispositifs de déplacement (16) et les bras de support (30) des seconds dispositifs de déplacement (18) sont coudés en sens inverse l'un de l'autre.

6. Installation de traitement pour le traitement de récipients, présentant un dispositif (10) selon l'une des revendications précédentes.

7. Procédé permettant de transporter des objets (12), de préférence des récipients, de formats différents au moyen d'un dispositif (10) selon l'une des revendications 1 à 5,
dans lequel le procédé présente :
le transport d'un objet (12) d'un premier format au moyen d'une paire formée par l'un des premiers dispositifs de déplacement (16) et l'un des seconds dispositifs de déplacement (18), dans lequel le premier dispositif de déplacement (16) est positionné avant le second dispositif de déplacement (18) de la paire dans une direction du chemin de transport (T) ; et
le transport d'un objet (12) d'un second format différent du premier format, de préférence en termes de taille et/ou de forme, au moyen d'une paire formée par l'un des premiers dispositifs de déplacement (16) et l'un des seconds dispositifs de déplacement (18), dans lequel le second dispositif de déplacement (18) est positionné avant le premier dispositif de déplacement (16) de la paire dans la direction du chemin de transport (T).
